# EUROPEAN PATENT APPLICATION

(11) **EP 0 893 287 A1**
(43) Date of publication of application: **27.01.1999**
(21) Application number: 97401794.9
(22) Date of filing: 25.07.1997
(51) Int. Cl.: B60D 1/44, A01B 59/042

(54) **Towing means for an agricultural vehicle**

(71) Applicant: New Holland Braud S.A., 85220 Coex (FR)
(72) Inventor: The designation of the inventor has not yet been filed
(74) Representative: Vandenbroucke, Alberic

(57) **Abstract**

An agricultural machine comprising:
- a frame (2) providing with ground-engaging wheels (3) for travelling the machine over a field;
- a towing bar (14) connected to said frame (2) and provided with hitch means (10) for connnecting said machine to a towing vehicle, said towing bar (14) being movable between a plurality of positions relative to said frame;
characterized in that said hitch means (10) are movable between a first position in alignment with the general direction of the towing bar (14) and a second position in alignment with the general direction of travel of the agricultural machine.

## Description

The present invention relates to an agricultural machine comprising a tow bar for connecting the machine to a tractor or the like and travelling the same over a field. More particularly the invention pertains to a movable tow bar which can positioned in various positions for adapting the path followed by said machine relative to the towing vehicle.

According to the invention there is provided an agricultural machine comprising:
- a frame provided with ground-engaging wheels for travelling the machine over a field;
- a towing bar connected to said frame and provided with hitch means for connecting said machine to a towing vehicle, said towing bar being movable between a plurality of positions relative to said frame;
   characterized in that said hitch means are movable between a first position in alignment with the general direction of the towing bar and a second position in alignment with the general direction of travel of the agricultural machine.

Preferably the hitch means comprise a hitch eye affixed to a movable support, which is mounted to the towing bar for pivotment about a vertical axis.

An agricultural machine in accordance with the present invention will now be described in greater detail, by way of example, with reference to the accompanying drawings, in which:
Figure 1 is a side elevational view of a towed grape harvester, comprising hitch means for connecting the harvester to a tractor;
Figure 2 is a top plan view of the hitch means in the harvesting position; and
Figure 3 is a top plan view of the hitch means in their position for road travel.

In the following description "right hand" and "left hand" references are determined by standing at the rear of the harvester and facing in the direction of normal forward travel. It is also to be understood that, throughout this description, terms such as "forward", "rearward", "upward", "downward", etc. are words of convenience and are not be construed as limiting terms.

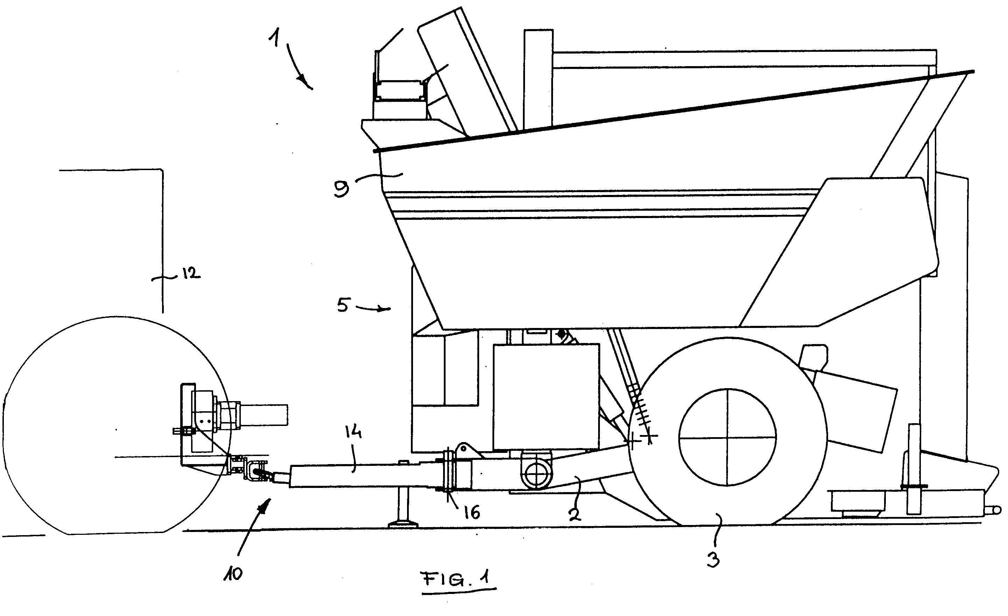

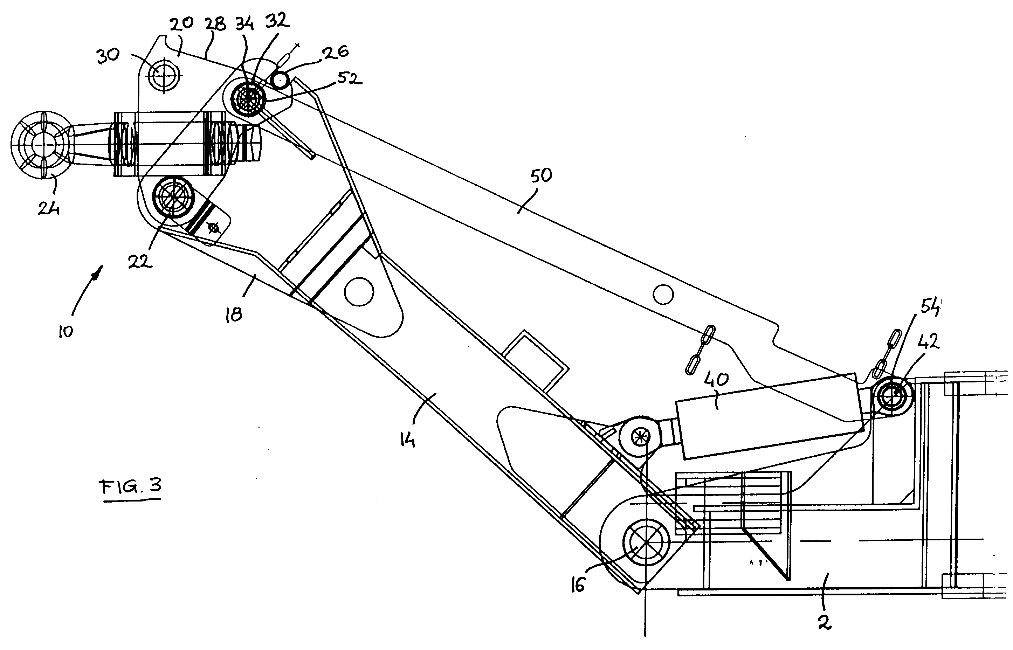

The agricultural machine shown in Figure 1 is a towed grape harvester, generally indicated by 1 and comprising a chassis or main frame 2, provided with a pair of wheels 3 (only one shown). The wheels may be driven via appropriate means such as hydrostatic motors for travelling the harvester 1 over a field. The frame 2 is in the form of a gantry in order to be able to straddle a row of plants or shrubs, such as grape-vines. In known manner, the frame 2 carries a harvesting assembly 5, comprising a shaker assembly (not shown) for dislodging the grapes from the vines and two elevator conveyors for collecting the detached grapes and conveying them to two storage tanks or bins 9.

The front portion of the frame 2 is provided with hitch means 10 for connecting the harvester 1 to a towing vehicle, such as a tractor 12. A towing bar 14 is mounted to the frame 2 by a pivot pin 16. Two extension plates 18 are affixed on top of and underneath the front end the towing bar 14. A hitch support 20 is mounted in between these plates 16 by a pivot pin 22 extending through holes in the support 20 and the plates 16. A hitch eye 24 is attached by appropriate means to the support 20.

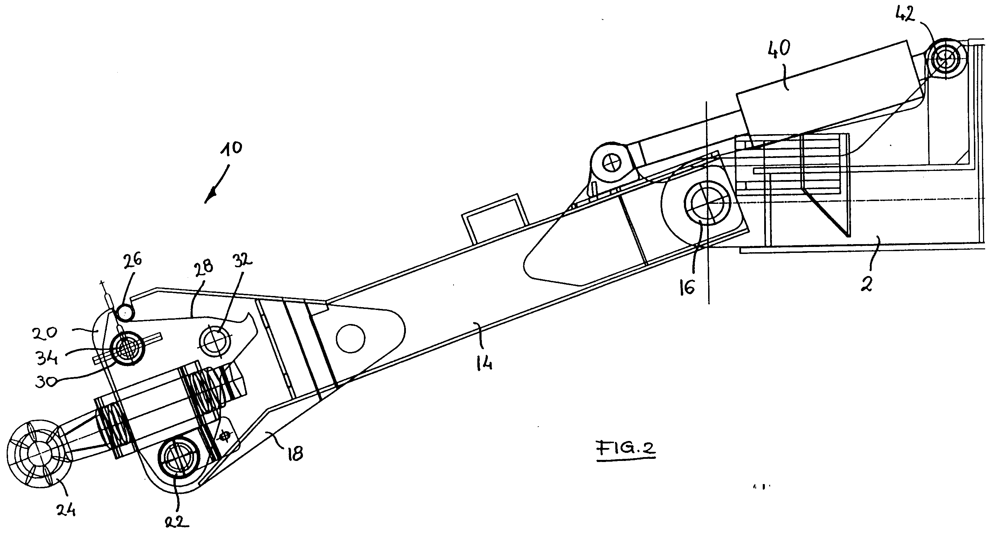

The support 20 may be pivoted to the towing bar 14 between two extreme positions shown in Figures 2 and 3. A spring pin 26 interacting with a cam profile 28 on the side of the support 20 defines the outer positions of the support 20 when the latter is pivoted about pin 22. In any of these outer positions a hole in the plates 18 is in alignment with one of two holes 30, 32 in the support 20. A locking pin 32 may then be inserted through these holes for securing the support 22 and hence the hitch eye 24 to the towing bar 14.

The position of the towing bar 14 to the frame 2 may be controlled by a linear actuator such as a hydraulic cylinder 40. The rod end of the cylinder is pivotally attached to the right side of the towing bar 14 and its chamber end is attached at pivot pin 42 to the frame 2. Extension of the cylinder 40 will pivot the bar 14 counterclockwise to the position shown in Figure 2. Retraction of the same will pivot the bar 14 clockwise to the position shown in Figure 3.

When the cylinder 40 is extended the harvester 1 will travel to the right with respect to the tractor 12. This is the normal working position of the grape harvester, permitting the frame 2 to straddle the vines, while the tractor 12 is riding besides the vine row. When the tractor 12 leaves the field for road travel, the harvester 1 has to be moved behind the tractor 12 to minimize the overall width of the tractor-harvester combination. The cylinder 40 is then retracted to shift the harvester frame 2 to the left.

During harvesting operations the extension of the cylinder 40 may be varied to align the harvester 1 with the vine row, independently of the sideways movement of the tractor 12. The pin 34 in the support 20 is mounted through hole 30 for maintaining the hitch eye 24 in alignment with the towing bar 14 as shown in Figure 2.

When the harvester 1 has to be travelled over roads, the cylinder 40 is retracted and the pin 34 is removed from the hitch means 10 for pivoting the support 20 counter-clockwise until the extension on cam profile 28 hits the spring pin 26. The support is then locked in position by inserting the pin 34 through hole 32. The hitch eye 24 is now aligned with the general direction of travel of the tractor 12.

In order to prevent uncontrolled movement of the harvester 1 in case the hydraulic cylinder 40 or its circuitry might fail, a positive locking of the frame 2 to the towing bar 14 is provided by a safety bar 50 which is mounted in the position shown in Figure 3 when the harvester 1 is prepared for road travel. The bar 50 may be made out of a profile and has at its front end a hole 52 having the same diameter as support holes 30 and 32. Its rear end is provided with a hole 54 fitting over an extension of the pivot pin 42 of the cylinder 40. The bar is slid over this pin 42 and secured thereto by suitable means such as a security pin. The front end of the bar 50 is then pivoted over the extension plates 18 and secured to the tow bar 14 by inserting the pin 34 through the hole 52 in the safety bar 50 and the hole 32 in the support 20. Hence it takes only one means for securing both the hitch eye 24 and the safety bar 50.

By bringing the hitch eye 24 into alignment with the towing direction of the tractor on the road, undue stress in the connection of the eye 24 to the tow bar 14 is prevented.

When normal harvesting operations are to be started again, the safety bar 50 is removed and attached at a convenient location to the front or the side of the harvester 1.

## Claims

1. An agricultural machine comprising:
- a frame provided with ground-engaging wheels for travelling the machine over a field;
- a towing bar connected to said frame and provided with hitch means for connecting said machine to a towing vehicle, said towing bar being movable between a plurality of positions relative to said frame;
characterized in that said hitch means are movable between a first position in alignment with the general direction of the towing bar and a second position in alignment with the general direction of travel of the agricultural machine.

2. An agricultural machine according to claim 1, characterized in that said hitch means comprise a hitch eye affixed to a movable support, which is mounted to the towing bar for pivotment about a vertical axis.

3. An agricultural machine according to claim 2, characterized in that said movable support comprises guide means for delimiting the pivotal movement of said support.

4. An agricultural machine according to claim 3, characterized in that said guide means comprise a cam profile on said support and a spring pin affixed to said towing bar.

5. An agricultural harvesting machine according to claim 3 or 4, characterized in that said hitch means further comprise locking means for locking said hitch means in said first or second position.

6. An agricultural harvesting machine according to claim 5, characterized in that said locking means comprises two holes in said support and a pin for securing said support through any of said holes to a single hole in the towing bar.

7. An agricultural harvesting machine according to any of the preceding claims, characterized in that said machine further comprises actuator means for varying the position of said towing bar to said frame and a securing bar for securing said towing bar in fixed position to said frame, thereby relieving said actuator means.

8. An agricultural harvesting machine according to claim 7, when appended to claim 6, characterized in that said securing pin equally secures an end said securing bar to said towing bar.

9. An agricultural harvesting machine according to claim 8, characterized in that said actuator means is mounted to said frame for pivotment about a vertical pin and said securing bar is secured at its other end to said vertical pin.
